Europäisches Patentamt

European Patent Office

Office européen des brevets

(11) Numéro de publication: **0 550 333 B1**

(12) **FASCICULE DE BREVET EUROPEEN**

(45) Date de publication du fascicule du brevet: **27.09.95**

(51) Int. Cl.6: **G01F 15/04**, G01F 1/66, G01N 27/22

(21) Numéro de dépôt: **92403555.3**

(22) Date de dépôt: **28.12.92**

(54) **Procédé et dispositif pour la mesure de débit gazeux.**

(30) Priorité: **30.12.91 FR 9116324**

(43) Date de publication de la demande:
**07.07.93 Bulletin 93/27**

(45) Mention de la délivrance du brevet:
**27.09.95 Bulletin 95/39**

(84) Etats contractants désignés:
**AT BE CH DE DK ES FR GB GR IE IT LI LU MC NL PT SE**

(56) Documents cités:
**EP-A- 0 093 275**
**US-A- 3 635 084**
**US-A- 4 663 977**
**US-A- 4 835 456**

(73) Titulaire: **GAZ DE FRANCE (SERVICE NATIO-NAL)**
**23 rue Philibert-Delorme**
**F-75017 Paris (FR)**

Titulaire: **UNIVERSITE DU OUEBEC A TROIS-RIVIERES**
**3351 Boulevard des Forges,**
**CP 500**
**Trois Rivières,**

**Ouebec G9A 5H7 (CA)**

(72) Inventeur: **Ingrain, Dominique**
**Résidence Clair de Seine**
**3 rue de 11 novembre 1918**
**F-92390 Villeneuve-la-Garenne (FR)**
Inventeur: **Bose, Tapan**
**3965, de Châteaufort,**
**Trois Rivières**
**Ouebec G8Y 2A8 (CA)**
Inventeur: **Saint-Arnaud, Jean-Marie**
**1765, Tavilois,**
**Trois-Rivières**
**Ouebec G8Y 2ES (CA)**

(74) Mandataire: **Thévenet, Jean-Bruno et al**
**Cabinet Beau de Loménie**
**158, rue de l'Université**
**F-75340 Paris Cédex 07 (FR)**

EP 0 550 333 B1

## Description

La présente invention concerne un procédé pour la mesure de débit gazeux dans les conduites de transport de gaz ainsi qu'un compteur de débit pour la mise en oeuvre de ce procédé.

Le mesurage d'un débit gazeux, dans les conditions normales, fait appel, outre à la connaissance de la température T et de la pression P, à deux autres grandeurs que sont le débit volumique mesuré à la température T et à la pression P, et le facteur de compressibilité Z, ou la densité $\rho$, grandeurs thermodynamiques dépendant de la pression, de la température et de la composition du gaz.

Si le débit volumique est une mesure facilement accessible avec une incertitude appréhendable et liée directement aux moyens mis en oeuvre, qu'il s'agisse de moyens mécaniques comme les compteurs à turbines ou à pistons par exemple ou de moyens statiques comme les débimètres à diaphragmes ou à ultrasons notamment, le facteur de compressibilité reste quant à lui une grandeur délicate à définir et à mesurer.

En effet, son calcul nécessite le recours à des équations d'état non validées dans les domaines de haute pression supérieure à 120 bar et basse température inférieure à -8 °C, et sa mesure est le plus souvent effectuée par l'intermédiaire de capteurs de masse volumique (de densité) dont les résultats sont exprimés par valeurs discrètes (l'analyse chromatographique nécessite un temps de 15 à 20 mn par essai).

Or, dans le domaine des combustibles gazeux, où la composition du gaz est amenée à évoluer ainsi que les valeurs des pressions et des températures nécessaires au calcul du facteur de compressibilité Z, les erreurs commises sur les volumes sont non négligeables et peuvent être source de litiges ou de controverses entre les vendeurs et acheteurs, surtout quant il s'agit de ramener les volumes mesurés aux conditions normales de pression et de température qui peuvent être définies par une autorité nationale ou locale ou bien encore plus simplement par un industriel par exemple.

La présente invention a pour but la mise en oeuvre d'un procédé de mesure des caractéristiques d'un gaz comme la pression, la température et le facteur de compressibilité afin de permettre la transmission à distance du débit de ce gaz sans aucune intervention humaine, seuls l'entretien et le contrôle nécessitant le recours restreint à un opérateur.

Ces buts sont atteints par un procédé pour la mesure du débit gazeux d'un fluide s'écoulant dans une conduite, comportant les étapes suivantes :

a) mesure, dans les conditions de circulation du gaz, de la température Tm et de la pression Pm de ce gaz par des capteurs de température et de pression disposés dans la conduite,

b) détermination, dans les conditions de circulation du gaz, du débit Qm de ce gaz par un dispositif de mesure de débit,

c) détermination, dans les conditions de circulation du gaz, de la constante diélectrique $\epsilon$ de ce gaz par la mesure de la capacité d'un transducteur capacitif traversé par ce gaz, la capacité à vide de cet élément ayant été préalablement étalonnée par une mesure sous vide,

d) calcul du facteur de compressibilité Zm par une unité de traitement et de contrôle à partir de la détermination de la constante diélectrique $\epsilon$ du gaz et des mesures de la température Tm et de la pression Pm, à l'aide de l'une des relations suivantes :

$$Zm = \frac{Pm}{RTm}\left[\frac{A\epsilon}{CM} + \frac{B\epsilon}{A\epsilon} + \frac{C\epsilon CM}{A\epsilon^2} - \frac{B\epsilon^2\ CM}{A\epsilon^3}\right]$$

ou

$$Zm = \frac{Pm}{RTm}\left[\frac{A\epsilon}{CM} + \frac{B\epsilon}{A\epsilon}\right]$$

ou

$$Zm = \left(\frac{Pm}{RTm}\right)\frac{\epsilon + 2}{\epsilon - 1}\ (A\epsilon)$$

et

$$CM = \frac{\epsilon - 1}{\epsilon + 2}$$

R étant la constante des gaz parfaits et $A_\epsilon$ $B_\epsilon$ et $C_\epsilon$ étant des coefficients dépendant de façon déterminée de la composition du gaz,

e) calcul du débit gazeux Q dans la conduite ramenée à des conditions de référence prédéterminées de température To, de pression Po et de facteur de compressibilité Zo par l'unité de traitement et de contrôle, à l'aide de la relation suivante :

$$Q = Qm\ \frac{Pm}{Po}\ \frac{To}{Tm}\ \frac{Zo}{Zm}\ .$$

Ce procédé peut être mis en oeuvre à l'aide d'un dispositif de mesure de débit gazeux d'un fluide s'écoulant dans une conduite, comportant une unité de traitement et de contrôle reliée d'une part à un dispositif de mesure de débit qui délivre une information représentative du débit Qm du gaz dans des conditions de température Tm et de pression Pm déterminées par des capteurs de température et de pression disposés dans cette conduite et d'autre part à un ensemble de détermination du facteur de compressibilité Zm qui comprend notamment des moyens de mesure de la constante diélectrique du gaz s'écoulant dans cette conduite, afin de déterminer la valeur du débit du gaz Q ramenée dans des conditions de référence de température To, de pression Po et de facteur de compressibilité Zo prédéfinies.

La constante diélectrique du gaz est obtenue préférentiellement à partir d'un transducteur capacitif constitué par un condensateur cylindrique afin de minimiser la turbulence existant lors de l'écoulement du gaz dans la conduite et placé dans les conditions thermodynamiques de circulation du gaz.

Avantageusement, le dispositif de mesure de débit associé à l'ensemble de mesure du facteur de compressibilité est constitué par un débitmètre à ultrasons.

L'unité de traitement et de contrôle comporte un moyen analogique pour l'évaluation de la constante diélectrique du gaz ; un circuit microcontrôleur pour, à partir de cette évaluation et des mesures de la pression, de la température et du débit de ce gaz, la détermination des paramètres caractéristiques du gaz; un ensemble de saisie et d'affichage pour la visualisation de ces paramètres à la demande d'un opérateur; et des circuits d'intertace pour la transmission à distance de ces paramètres.

Selon une caractéristique préférentielle, le moyen analogique comporte un montage en pont dont le transducteur capacitif constitue une première branche et dont une seconde branche, adjacente à la première, comporte un condensateur de référence en parallèle avec une capacité en série avec un atténuateur à commande numérique, les branches opposées aux première et seconde branches étant chacune munies d'un générateur de signal alternatif de phases opposées, et l'équilibre est réalisé lorsqu'un détecteur placé à la jonction des première et seconde branches délivre une tension nulle après une variation de la valeur de l'atténuateur commandée par l'unité de traitement et de contrôle.

Dans un premier mode de mise en oeuvre du dispositif de mesure selon l'invention, le transducteur capacitif est placé en dérivation à l'extérieur de la conduite dans le circuit d'une canalisation alimentée en amont de ce transducteur capacitif par le gaz s'écoulant dans cette conduite, une enveloppe isolante assurant une isolation thermique de l'ensemble afin de mettre ce transducteur capacitif dans des conditions thermodynamiques identiques à celles du gaz, notamment de température et de pression.

Dans un autre mode de mise en oeuvre du compteur selon l'invention, le transducteur capacitif est placé en dérivation dans la conduite et est traversé par le gaz s'écoulant dans cette conduite amené par une canalisation alimentée en amont de ce transducteur capacitif.

Enfin, dans encore un autre mode de réalisation, ledit transducteur capacitif est placé dans une enceinte disposée dans la conduite et remplie du gaz s'écoulant dans cette conduite amené par une canalisation alimentée en amont de ce transducteur capacitif.

L'invention sera mieux comprise à la lecture de la description faite ci-après, à titre indicatif mais non limitatif, en référence aux dessins annexés sur lesquels :

- la figure 1 représente un dispositif classique de mesure de la vitesse d'écoulement d'un gaz circulant dans une conduite,
- la figure 2 montre de façon simplifiée le transducteur capacitif utilisé pour déterminer la constante diélectrique du gaz selon l'invention,
- la figure 3 est une vue générale du dispositif ou compteur de mesurage de débit gazeux selon l'invention,
- la figure 4 est un schéma simplifié de l'unité informatique de traitement et de contrôle du dispositif de mesurage selon l'invention,
- la figure 5 montre l'architecture de l'ensemble analogique pour la détermination de la constante diélectrique du gaz circulant dans le transducteur capacitif de la figure 2,

- les figures 6a à 6c représentent différentes positions pour le placement de l'ensemble de mesure du facteur de compressibilité du compteur de mesurage selon l'invention.

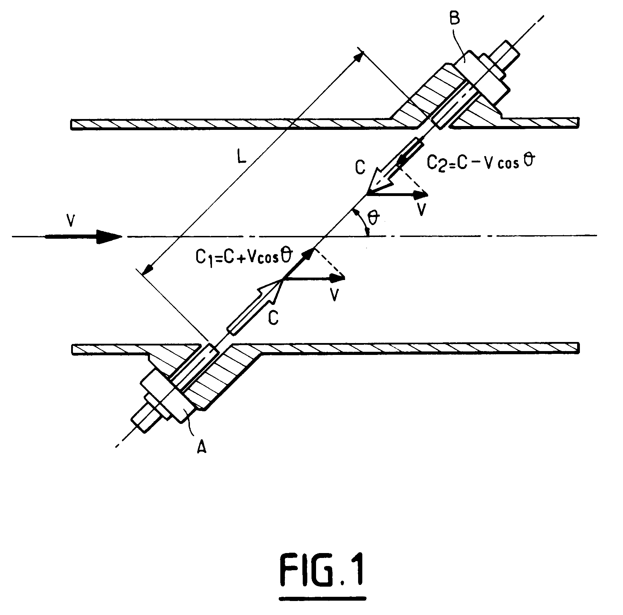

Classiquement, la mesure de débit fait appel à des techniques bien connues comme les compteurs à turbines ou à pistons. Cependant, de tels dispositifs, de par le nombre de pièces en mouvement qu'ils contiennent, ne présentent pas toujours les garanties de longévité que demandent certaines installations gazières. C'est pourquoi, on a aujourd'hui de plus en plus recours à l'utilisation des phénomènes physiques liés à la vitesse d'écoulement des gaz au travers de dispositifs tels que les compteurs à tourbillons qui utilisent les propriétés tourbillonnaires du fluide créées par un obstacle placé dans l'écoulement ou bien les compteurs à ultrasons, comme celui représenté sur la figure 1, qui sont fondés sur la mesure de la vitesse de propagation d'ondes ultrasonores dans le gaz.

Ce débitmètre met à profit la variation de vitesse apparente du son mesuré dans un fluide à l'aide de transducteurs lorsque la vitesse d'écoulement de ce fluide varie. Plus exactement, on mesure la différence du temps de propagation du son nécessaire dans chacun des deux sens entre deux sondes émettrices et réceptrices A,B placées de chaque coté de la conduite, à une distance L l'une de l'autre, l'axe des sondes faisant un angle $\theta$ avec l'axe de cette conduite donc de l'écoulement.

Les temps de parcours $T_{AB}$ et $T_{BA}$ permettent le calcul de $\Delta T$ soit :

$$\Delta T = 2*V*L*\cos(\theta)/[c^2 - V^2\cos^2(\theta)] \text{ et avec } D = L\sin(\theta)$$

il vient pour la vitesse d'écoulement du fluide

$$V \approx \frac{c^2 \Delta T}{2D} \text{Tg}(\theta)$$

avec
$\quad$ V $\quad$ : vitesse d'écoulement du flux gazeux,
$\quad$ D $\quad$ : diamètre de la conduite,
$\quad$ c $\quad$ : célérité du son dans le gaz,

Les signaux envoyés peuvent être des trains d'onde ou des impulsions, les seconds permettant d'atteindre une meilleure justesse. Pour une justesse encore accrue, on emploie la méthode dite des trois cordes, c'est-à-dire que l'on procède à des mesures en plusieurs points de la section de la conduite car les vitesses du fluide ne sont pas homogènes.

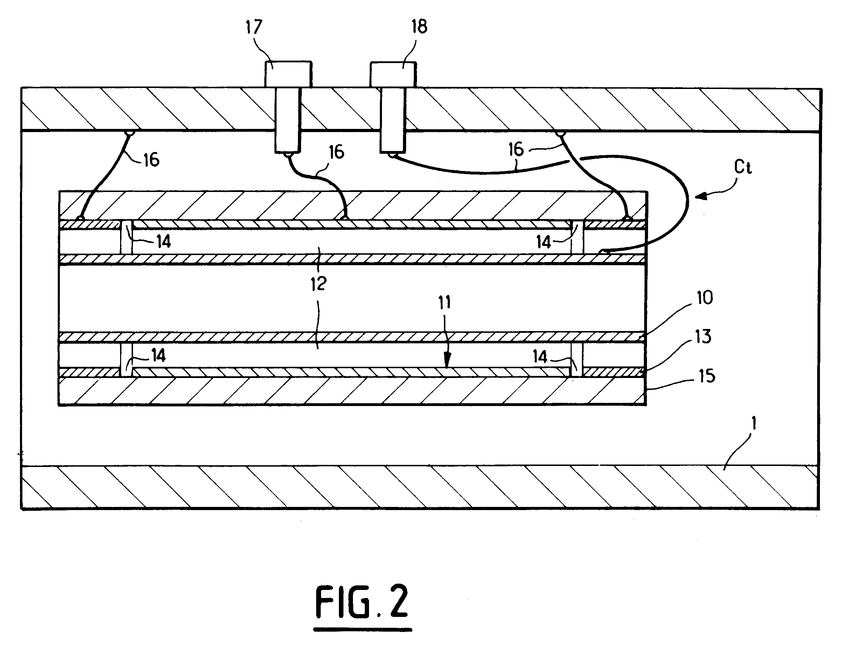

Les temps d'intégration nécessaires sont de 40s pour des vitesses supérieures à 10m/s, 100s pour des vitesses inférieures à 10m/s et 340s pour des vitesses inférieures à 2m/s. La justesse d'un tel système est de 0,25% entre 2 et 10% de la pleine échelle et de 0,15% au dessus de 10% avec une probabilité de 95%. En outre, l'absence de tout élément en mouvement lui confère une très grande longévité qui s'accorde parfaitement avec l'ensemble de mesure du facteur de compressibilité Z qui est également un dispositif totalement statique et sera maintenant décrit en regard de la figure 2.

Le dispositif de mesure du facteur de compressibilité repose sur la détermination de la constante diélectrique $\epsilon$ du gaz circulant dans une conduite 1 dont on désire déterminer le débit gazeux. Pour cela, ce dispositif comprend un transducteur capacitif Ct et un condensateur de référence C ref.

Le transducteur capacitif Ct est un condensateur de forme cylindrique afin de minimiser la turbulence comportant une première électrode interne 10 cylindrique d'un diamètre et d'une longueur déterminés et une deuxième électrode externe 11 également cylindrique, concentrique à la première mais extérieure à celle-ci, c'est-à-dire d'un diamètre supérieur permettant ainsi la création d'un espace libre 12 de section annulaire entre ces deux électrodes.

L'électrode externe 11 qui présente une longueur sensiblement inférieure à celle de l'électrode interne 10, est munie à chacune de ses extrémités d'une troisième électrode 13 disposée dans son prolongement et simplement séparée par un interstice 14, l'ensemble présentant une même longueur que l'électrode interne 10. L'électrode externe 11 et la troisième électrode 13, qui joue le rôle d'une électrode de garde, sont en contact avec un cylindre extérieur 15 constitué d'un matériau isolant, les différentes électrodes étant réalisées dans un matériau conducteur par exemple métallique.

Des fils de liaisons 16 permettent de relier ces électrodes 10,11,13 avec un dispositif électronique de contrôle, non représenté, au travers de bornes 17,18 montées sur la conduite 1. La borne 17 est par exemple reliée à l'électrode externe 11 et la borne 18 à l'électrode interne 10, l'électrode de garde 13 étant reliée directement à la conduite 1. Typiquement, le transducteur capacitif mesure 300mm de long pour un diamètre de 100mm. Le diamètre externe de l'électrode interne est de 60mm et le diamètre interne de l'électrode externe est de 75mm. L'ensemble présente une capacité dans le vide de 100pF qui peut atteindre 105pF sous une pression de 60 bar. Le condensateur de référence Cref aura lui aussi une capacité de 100 pF stable à plus ou moins 0,001pF. Bien évidemment, ces valeurs ne sont données qu'à titre indicatif et ne sont nullement limitatives, dépendant notamment des dimensions de la conduite.

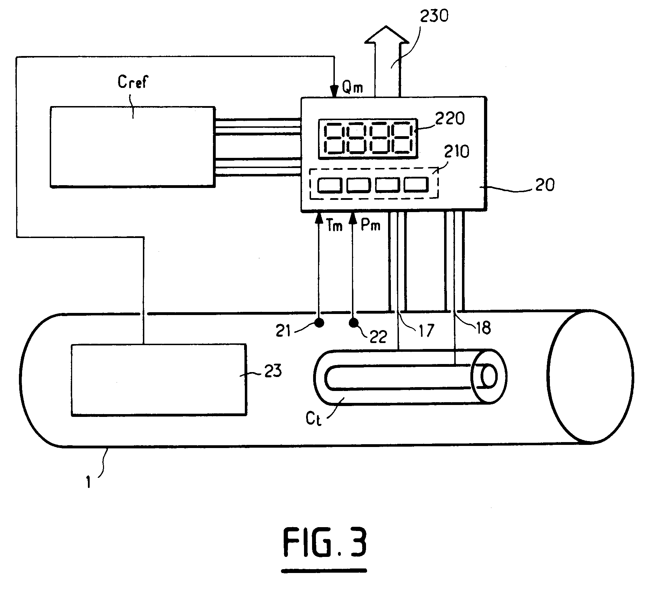

La figure 3 représente une vue générale du dispositif de mesurage de débit gazeux d'une conduite 1 selon l'invention. Le dispositif est organisé autour d'une unité centrale de contrôle et de traitement 20 qui reçoit différentes informations en provenance de la conduite 1 et restitue et affiche divers résultats après mesure et éventuellement calcul.

Les informations reçues sont principalement de quatre ordres : la température du fluide s'écoulant dans la conduite 1, cette température étant mesurée par exemple par une jauge de température 21 disposée dans cette conduite ; la pression de ce fluide déterminée à l'aide d'une jauge de pression 22; le débit du fluide, dans les conditions thermodynamiques existant au moment du mesurage, déterminé à l'aide de l'un des dispositifs classiques définis précédemment et notamment d'un débitmètre à ultrasons 23 ; enfin, la constante diélectrique du gaz circulant dans cette conduite 1 obtenue par le dispositif de mesure du facteur de compressibilité comportant le transducteur capacitif Ct et le condensateur de référence Cref.

A l'aide de ces différentes informations, l'unité de traitement et de contrôle 20 détermine divers paramètres dont la masse volumique $\rho$ et le facteur de compressibilité Z et calcule alors le débit gazeux ramené à des conditions thermodynamiques déterminées par avance qui peuvent être les conditions dites normales :

(T = 273,15K et P = 101325 Pa)

ou encore les conditions dites standards :

(T = 288,15K et P = 101325 Pa)

ou toutes autres conditions de référence définies au préalable et pouvant dépendre d'une normalisation particulière ou d'une demande spécifique.

Un clavier 210 de l'unité informatique 20 permet de sélectionner les informations ou paramètres qu'un opérateur peut alors visualiser, lors d'opérations de maintenance ou de contrôle, sur un afficheur 220 de cette unité 20. L'ensemble des résultats de mesure ou de calcul sont disponibles pour exploitation sous forme numérique sur un bus 230 de l'unité 20.

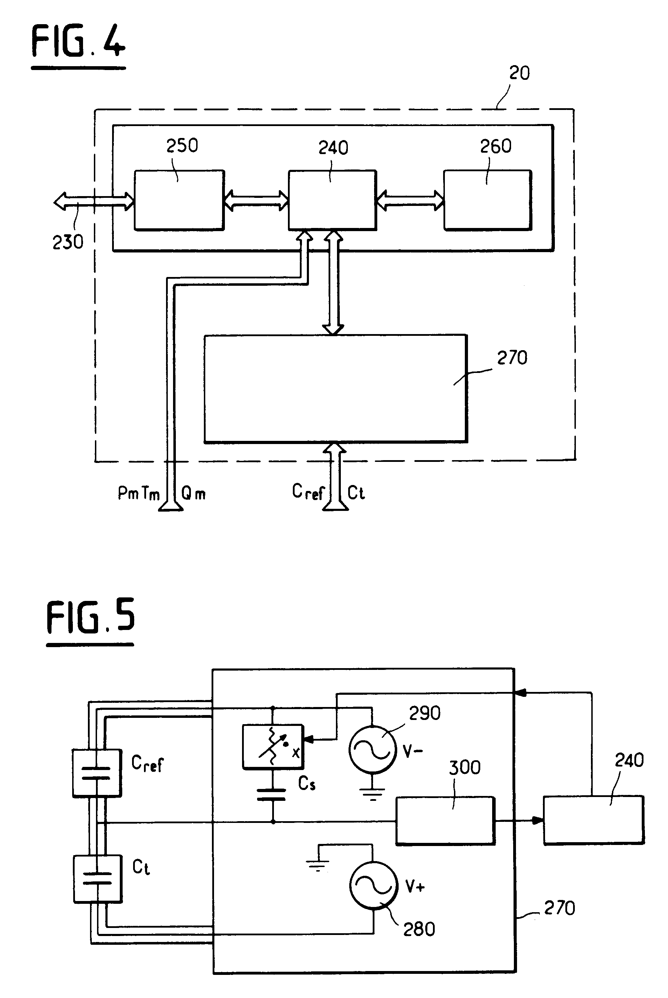

Les figures 3 et 4 montrent plus en détail l'architecture de l'unité informatique de traitement et de contrôle 20. Cette unité est organisée autour d'un microcontrôleur 240 qui peut être avantageusement constitué par un microprocesseur classique avec ses mémoires de données et de programme associées, de circuits d'interface 250 qui permettent une liaison, au travers du bus 230, vers l'extérieur et donc un relevé à distance des différents paramètres calculés ou mesurés, d'un ensemble de saisie et d'affichage 260 pour la visualisation de ces paramètres à destination d'un éventuel opérateur, et surtout un moyen analogique 270 destiné à la mesure de la capacité du transducteur capacitif Ct.

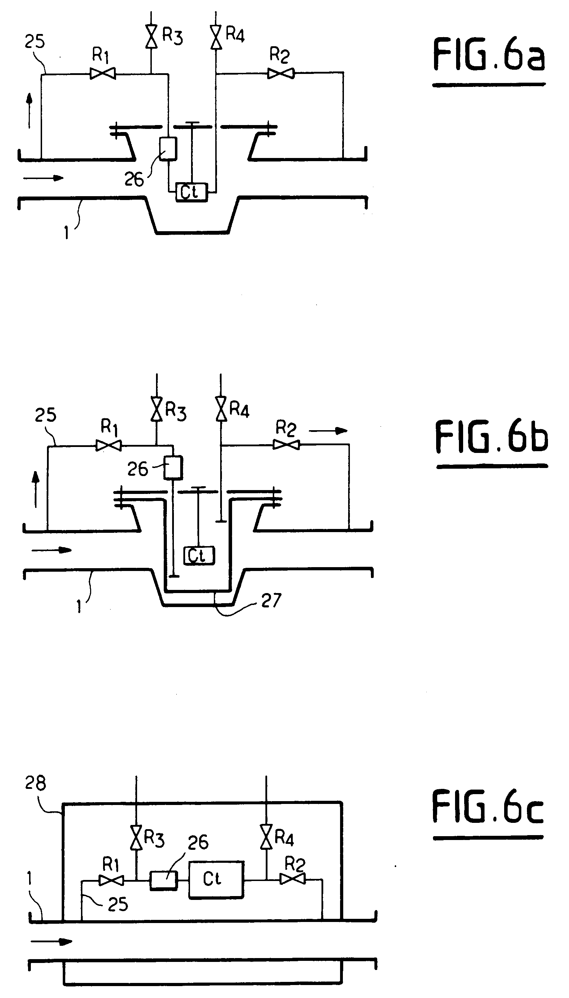

Ce moyen analogique 270, comme le montre la figure 5, est relié d'une part au condensateur de référence Cref et au transducteur capacitif Ct et d'autre part au microcontrôleur 240. Il forme avec ces deux capacités Ct et Cref un pont de capacités dont l'équilibre est recherché par un atténuateur à commande numérique X. Une première branche de ce pont comporte la capacité à déterminer Ct et un premier générateur alternatif 280 est disposé dans la branche opposée. Une seconde branche de ce pont, adjacente à la première, comporte en parallèle la capacité de référence Cref et une capacité Cs en série avec l'atténuateur à commande numérique X et un second générateur alternatif 290 de phase opposée au premier est disposé dans la branche opposée. Enfin, un détecteur synchrone 300 disposé à la jonction de la première et la seconde branche permet d'évaluer la tension en ce point et donc de déterminer la valeur de la capacité Ct lorsque cette tension est nulle, c'est-à-dire lorsque le pont ainsi créé est équilibré. Cet équilibre est obtenu par la variation de la valeur de l'atténuateur X, laquelle variation est commandée par le microcontrôleur 240.

A l'équilibre, la tension aux bornes du détecteur est nulle et l'on a :

$$Ct = Cref + X^*Cs$$

La détermination de la constante diélectrique $\epsilon$ se fait alors simplement par le rapport de cette capacité Ct à une capacité Co correspondant à la capacité que présente le transducteur capacitif sous vide et qui a été déterminée préalablement soit: $\epsilon = \frac{Ct}{Co}$

Le facteur de compressibilité est donné par la formule suivante :

5

$$Z = \frac{P}{\rho RT}$$

où P est la pression, $\rho$ la masse volumique molaire, R la constante molaire des gaz parfaits dite aussi constante universelle des gaz et T la température absolue.

et $\rho$ peut être déterminé au moyen de l'équation de Clausius-Mossotti :

$$\frac{(\varepsilon - 1)}{(\varepsilon + 2)} \frac{1}{\rho} = A_\varepsilon + B_\varepsilon \rho + C_\varepsilon \rho^2 + \ldots$$

avec $\epsilon$ la constante diélectrique du gaz et $A_\epsilon$, $B_\epsilon$, $C_\epsilon$, coefficients connus dépendant de la composition du gaz et de la température. (Voir par exemple l'article de A.D. BUCKINGHAM, R.H. COLE et H. SUTTER paru dans "The Journal of Chemical Physics" du 1er juin 1970, volume 52, numéro 11, page 5960.

En combinant les deux dernières relations on trouve pour le facteur de compressibilité mesuré :

$$Zm = \frac{Pm}{RTm} \left[ \frac{A_\varepsilon}{CM} + \frac{B_\varepsilon}{A_\varepsilon} + \frac{C_\varepsilon * CM}{A_\varepsilon^2} - \frac{B_\varepsilon^2 * CM}{A_\varepsilon^3} \right] \text{avec } CM = \frac{\varepsilon - 1}{\varepsilon + 2}$$

Il doit être noté qu'en limitant l'équation de Clausius-Mossotti à l'ordre 2, on aurait pour Z l'expression suivante :

$$Zm = \frac{Pm}{RTm} \left[ \frac{A_\varepsilon}{CM} + \frac{B_\varepsilon}{A_\varepsilon} \right] \text{avec } CM = \frac{\varepsilon - 1}{\varepsilon + 2}$$

et au premier ordre :

$$Zm = \frac{Pm}{RTm} * \frac{A_\varepsilon}{CM} = \frac{Pm}{RTm} * \left[ \frac{\varepsilon + 2}{\varepsilon - 1} \right] * A_\varepsilon$$

Cette approximation d'ordre 1 est parfaitement suffisante dans le cadre d'un fonctionnement à des pressions inférieures à 100 bar et sous réserve d'une détermination préalable de $A_\epsilon$, la mesure de $\epsilon$, Pm et Tm permettra alors très simplement le calcul de Zm dans les conditions de circulation du gaz. Ces conditions de circulation variant de façon non négligeable en exploitation, il est nécessaire, pour favoriser les transactions entre vendeurs et acheteurs et pour tenir compte des différentes conditions de référence énoncées précédement, de ramener ces mesures à ces conditions thermodynamiques de référence, c'est-à-dire par application du coefficient correcteur suivant :

$$K = (Pm/Po)(Zo/Zm)(To/Tm)$$

avec :

Tm la température mesurée dans les conditions de circulation du gaz par la jauge de température 21,

Pm la pression mesurée dans les conditions de circulation du gaz par la jauge de pression 22,

Zm le facteur de compressibilité calculé dans les conditions de circulation du gaz d'après les mesures de $\epsilon$, Tm et Pm,

To, Po les température et pression dans les conditions de référence et $Zo \approx 1$.

Le débit fourni par le dispositif de mesurage de débit gazeux selon l'invention sera alors égal à : Q = KQm, Qm étant le débit mesuré dans les conditions de circulation du gaz par le dispositif de mesure de débit 23.

Il doit être noté que l'utilisation du microcontrôleur 240 dans l'unité informatique 20 permet une accessibilité à tous les paramètres intervenant dans la détermination du débit gazeux. Ainsi, l'opérateur pourra demander l'affichage non seulement de ce débit Q mais aussi du facteur de compressibilité Z, de la masse volumique $\rho$, de la capacité Ct ou de la différence entre cette capacité Ct et la capacité de référence Cref. En outre, en fonction du dispositif de mesure employé, il pourra aussi afficher la vitesse d'écoulement du gaz ou encore la quantité de gaz. Les différentes déterminations supposent bien évidemment l'introduction préalable dans le microcontrôleur 240 des différentes constantes nécessaires notamment au calcul de Z.

Il doit être noté que la disposition du transducteur capacitif Ct directement dans la conduite 1 n'est pas indispensable, il est même préférable, du fait des turbulences existant dans le gaz véhiculé, d'isoler celui-ci du flux gazeux tout en restant dans les mêmes conditions thermodynamiques. Les figures 6a à 6c montrent différentes positions possibles pour la mise en place de ce transducteur.

Dans le figure 6a, le transducteur est placé dans la conduite 1 donc à la même température T mais est isolé du flux gazeux, étant alimenté par une canalisation parallèle 25 alimentée en amont depuis la conduite 1. On évite ainsi de se trouver en système turbulent ce qui améliore la qualité des mesures.

Un filtre 26 et des robinets R1 à R4 placés sur la canalisation 25 en amont ou en aval du transducteur complètent ce dispositif. Afin de réduire encore ces perturbations, il est possible de recourir au montage de la figure 6b dans lequel le transducteur est placé dans une enceinte 27 placée dans la conduite 1. Cette enceinte est alimentée en gaz par la canalisation 25. Ce dispositif, en diminuant la vitesse d'écoulement du gaz par le placement du transducteur dans cette enceinte, permet de mieux s'affranchir des perturbations inhérentes à l'écoulement du gaz dans la conduite.

Toutefois, l'un comme l'autre de ces deux montages nécessitent de procéder à une ouverture de la conduite pour mettre en place le transducteur. C'est pourquoi, il est possible également de recourir au montage de la figure 6c dans lequel le transducteur est placé en dérivation à l'extérieur de la conduite 1. Afin de garder à ce montage les mêmes conditions thermodynamiques que celles du gaz traversant la conduite, notamment une même température, la boucle de dérivation comprenant le transducteur, la canalisation 25 et les différents filtre et robinets doit être inclus dans une enveloppe isolante 28 recouvrant également une partie de la conduite 1. Cette enveloppe 28 réalise ainsi une isolation thermique et permet l'évolution du transducteur capacitif Ct dans des conditions thermodynamiques identiques à celle du gaz traversant la conduite 1.

Le choix entre chacun de ces montages, ou d'autres équivalents que l'homme de l'art saura mettre en oeuvre, se fait essentiellement en fonction notamment de l'accessibilité à la conduite ou bien du type d'environnement rencontré, plus ou moins agressif. La simplicité de ces montages, leur miniaturisation possible, donnent au dispositif ou capteur de mesurage selon l'invention un avantage décisif par rapport aux dispositifs existants, notamment dans le cadre d'une utilisation à pression élevée.

Enfin, ce recours à la constante diélectrique du gaz en permettant la réalisation d'un compteur entièrement électronique facilite le contrôle à distance des installations, notamment de transport de gaz naturel, qui en seront équipées.

## Revendications

1. Procédé pour la mesure du débit gazeux d'un fluide s'écoulant dans une conduite, comportant les étapes suivantes :

a) mesure, dans les conditions de circulation du gaz, de la température Tm et de la pression Pm de ce gaz par des capteurs de température (21) et de pression (22) disposés dans la conduite (1),

b) détermination dans les conditions de circulation du gaz, du débit Qm de ce gaz par un dispositif de mesure de débit (23),

caractérisé en ce qu'il comporte en outre les étapes suivantes :

c) détermination, dans les conditions de circulation du gaz, de la constante diélectrique $\epsilon$ de ce gaz, par la mesure de la capacité d'un transducteur capacitif (Ct) traversé par ce gaz, la capacité à vide de cet élément (Co) ayant été préalablement étalonnée par une mesure sous vide,

d) calcul du facteur de compressibilite Zm par une unité de traitement et de contrôle (20) à partir de la détermination de la constante diélectrique $\epsilon$ du gaz et des mesures de la température Tm et de la pression Pm, à l'aide de la relation suivante :

$$Zm = \frac{Pm}{RTm}\left[\frac{A\epsilon}{CM} + \frac{B\epsilon}{A\epsilon} + \frac{C\epsilon CM}{A\epsilon^2} - \frac{B\epsilon^2\ CM}{A\epsilon^3}\right] \text{ et } CM = \frac{\epsilon - 1}{\epsilon + 2},$$

R étant la constante des gaz parfaits et $A_\epsilon$, $B_\epsilon$, et $C_\epsilon$ des coefficients dépendant de façon déterminée de la composition du gaz,

e) calcul du débit gazeux Q dans la conduite (1) ramené à des conditions de référence prédéterminées de température To, de pression Po et de facteur de compressibilité Zo par l'unité de traitement et de contrôle (20), à l'aide de la relation suivante :

$$Q = Qm \; \frac{Pm}{Po} \; \frac{To}{Tm} \; \frac{Zo}{Zm} \; .$$

**2.** Procédé pour la mesure du débit gazeux d'un fluide s'écoulant dans une conduite comportant les étapes suivantes :

a) mesure, dans les conditions de circulation du gaz, de la température Tm et de la pression Pm de ce gaz par des capteurs de température (21) et de pression (22) disposés dans la conduite (1),

b) détermination, dans les conditions de circulation du gaz, du débit Qm de ce gaz par un dispositif de mesure de débit (23),

caractérisé en ce qu'il comporte en outre les étapes suivantes :

c) détermination, dans les conditions de circulation de gaz, de la constante diélectrique $\epsilon$ de ce gaz par la mesure de la capacité d'un transducteur capacitif (Ct) traversé par ce gaz, la capacité à vide de cet élément (Co) ayant été préalablement étalonnée par une mesure sous vide,

d) calcul du facteur de compressibilité Zm par une unité de traitement et de contrôle (20) à partir de la détermination de la constante diélectrique $\epsilon$ du gaz et des mesures de la température Tm et de la pression Pm, à l'aide de la relation suivante :

$$Zm = \frac{Pm}{RTm} \left[ \frac{A\epsilon}{CM} + \frac{B\epsilon}{A\epsilon} \right] et \quad CM = \left[ \frac{\epsilon - 1}{\epsilon + 2} \right]$$

R étant la constante des gaz: parfaits et $A_\epsilon$ et $B_\epsilon$ étant des coefficients dépendant de façon déterminée de la composition du gaz,

e) calcul du débit gazeux Q dans la conduite (1) ramené à des conditions de référence prédéterminées de température To, de pression Po et de facteur de compressibilité Zo par l'unité de traitement et de contrôle (20), à l'aide de la relation suivante :

$$Q = Qm \; \frac{Pm}{Po} \; \frac{To}{Tm} \; \frac{Zo}{Zm} \; .$$

**3.** Procédé pour la mesure du débit gazeux d'un fluide s'écoulant dans une conduite comportant les étapes suivantes :

a) mesure, dans les conditions de circulation du gaz, de la température Tm et de la pression Pm de ce gaz par des capteurs de température (21) et de pression (22) disposés dans la conduite (1),

b) détermination, dans les conditions de circulation du gaz, du débit Qm de ce gaz par un dispositif de mesure de débit (23),

caractérisé en ce qu'il comporte en outre les étapes suivantes :

c) détermination, dans les conditions de circulation de gaz, de la constante diélectrique $\epsilon$ de ce gaz par la mesure de la capacité d'un transducteur capacitif (Ct) traversé par ce gaz, la capacité à vide de cet élément (Co) ayant été préalablement étalonnée par une mesure sous vide,

d) calcul du facteur de compressibilite Zm par une unité de traitement et de contrôle (20) à partir de la détermination de la constante diélectrique $\epsilon$ du gaz et des mesures de la température Tm et de la pression Pm, à l'aide de la relation suivante:

$$Zm = \left(\frac{Pm}{RTm}\right)\left[\frac{\varepsilon + 2}{\varepsilon - 1}\right](A_\varepsilon)$$

R étant la constante des gaz parfaits et $A_\varepsilon$ étant un coefficient dépendant de façon déterminée de la composition du gaz,

e) calcul du débit gazeux Q dans la conduite (1) ramené à des conditions de référence prédéterminées de température To, de pression Po et de facteur de compressibilité Zo par l'unité de traitement et de contrôle (20), à l'aide de la relation suivante :

$$Q = Qm \frac{Pm}{Po} \frac{To}{Tm} \frac{Zo}{Zm}.$$

4. Procédé selon les revendications 1,2 ou 3, caractérisé en ce que le transducteur capacitif (Ct) est constitué par un condensateur cylindrique afin de minimiser la turbulence existant lors de l'écoulement du gaz dans la conduite (1).

5. Dispositif de mesure du débit gazeux d'un fluide s'écoulant dans une conduite, caractérisé en ce qu'il comporte une unité de traitement et de contrôle (20) reliée d'une part à un dispositif de mesure de débit (23) qui délivre une information représentative du débit Qm du gaz dans des conditions de température Tm et de pression Pm déterminées par des capteurs de température (21) et de pression (22) disposés dans cette conduite (1) et d'autre part à un ensemble de détermination du facteur de compressibilité Zm (10 à 18) qui comprend notamment des moyens de mesure de la constante diélectrique $\epsilon$ du gaz s'écoulant dans cette conduite, afin de déterminer la valeur du débit du gaz Q ramenée dans des conditions de référence de température To, de pression Po et de facteur de compressibilité Zo prédéfinies.

6. Dispositif de mesure selon la revendication 5, caractérisé en ce que ladite mesure de la constante diélectrique $\epsilon$ du gaz est obtenue par un transducteur capacitif (Ct) placé dans les conditions thermodynamiques de circulation du gaz.

7. Dispositif de mesure selon la revendication 6, caractérisé en ce que ledit transducteur capacitif (Ct) est constitué par un condensateur cylindrique afin de minimiser la turbulence existant lors de l'écoulement du gaz dans la conduite (1).

8. Dispositif de mesure selon l'une quelconque des revendications 5 à 7, caractérisé en ce que ladite unité de traitement et de contrôle comporte un moyen analogique (270) pour l'évaluation de la constante diélectrique $\epsilon$ du gaz; un circuit microcontrôleur (240) pour, à partir de cette évaluation et des mesures de la pression, de la température et du débit de ce gaz, déterminer des paramètres caractéristiques du gaz ; un ensemble de saisie et d'affichage (260) pour la visualisation de ces paramètres à la demande d'un opérateur ; et des circuits d'interface (250) pour la transmission à distance de ces paramètres.

9. Dispositif de mesure selon la revendication 8, caractérisé en ce que ledit moyen analogique comporte un montage au pont dont le transducteur capacitif (Ct) constitue une première branche et dont une seconde branche, adjacente à la première, comporte un condensateur de référence (Cref) en parallèle avec une capacité (Cs) en série avec un atténuateur à commande numérique (X), les branches opposées aux première et seconde branches étant chacune munies d'un générateur de signal alternatif de phases opposées, et en ce que l'équilibre est réalisé lorsqu'un détecteur (300) placé à la jonction des première et seconde branches délivre une tension nulle après une variation de la valeur de l'atténuateur (X) commandée par l'unité de traitement et de contrôle (20).

10. Dispositif de mesure selon l'une quelconque des revendications 5 à 9, caractérisé en ce que ledit dispositif de mesure de débit est constitué par un débitmètre à ultrasons.

**11.** Dispositif de mesure selon l'une quelconque des revendications 5 à 10, caractérisé en ce que ledit transducteur capacitif est placé en dérivation à l'extérieur de la conduite (1) dans le circuit d'une canalisation (25) alimentée en amont de ce transducteur capacitif (Ct) par le gaz s'écoulant dans cette conduite, une enveloppe isolante (28) assurant une isolation thermique de l'ensemble afin de mettre ce transducteur capacitif dans des conditions thermodynamiques identiques à celles du gaz, notamment de température.

**12.** Dispositif de mesure selon l'une quelconque des revendications 5 à 10, caractérisé en ce que ledit transducteur capacitif est placé en dérivation dans la conduite (1) et est traversé par le gaz s'écoulant dans cette conduite amené par une canalisation (25) alimentée en amont de ce transducteur capacitif (Ct).

**13.** Dispositif de mesure selon l'une quelconque des revendications 5 à 10, caractérisé en ce que ledit transducteur capacitif est placé dans une enceinte (27) disposée dans la conduite (1) et remplie du gaz s'écoulant dans cette conduite amené par une canalisation (25) alimentée en amont de ce transducteur capacitif (Ct).

**Claims**

**1.** Method for measuring the gas flow of a fluid flowing along a duct, comprising the following steps:
a) measuring the temperature Tm and the pressure Pm of said gas under its flow conditions by means of temperature (21) and pressure (22) sensors disposed in the duct (1);
b) determining the flow rate Qm of said gas under its flow conditions by means of a flow measuring device (23),
  characterized in that it further comprises the following steps:
c) determining the dielectric constant $\epsilon$ of said gas under its flow conditions, by measuring the capacitance of a capacitive transducer (Ct) through which the gas passes, the capacitance <u>in vacuo</u> of said component(Co) having previously been established by measurements performed <u>in vacuo</u>;
d) calculating the compressibility factor Zm by means of a processing and control unit (20) on the basis of the determined dielectric constant $\epsilon$ of the gas and of the measured temperature and pressure Tm, Pm, using the following equation:

$$Zm = \frac{Pm}{RTm} \left[ \frac{A_\epsilon}{CM} + \frac{B_\epsilon}{A_\epsilon} + \frac{C_\epsilon CM}{A_\epsilon^2} - \frac{B_\epsilon^2 CM}{A_\epsilon^3} \right]$$

with:

$$CM = \frac{\epsilon - 1}{\epsilon + 2}$$

R being the perfect gas constant and $A_\epsilon$, $B_\epsilon$, and $C_\epsilon$ being coefficients depending in determined manner on the composition of the gas,
e) calculating the gas flow rate Q along the duct (1) as reduced to predetermined reference conditions of temperature To, pressure Po, and compressibility factor Zo in the processing and control unit (20), using the following equation:

$$Q = Qm(Pm/Po)(To/Tm)(Zo/Zm).$$

**2.** Method for measuring the gas flow of a fluid flowing along a duct, comprising the following steps:
a) measuring the temperature Tm and the pressure Pm of said gas under its flow conditions by means of temperature (21) and pressure (22) sensors disposed in the duct (1),

b) determining the flow rate Qm of said gas under its flow conditions by means of a flow measuring device (23),

characterized in that it further comprises the following steps:

c) determining the dielectric constant $\epsilon$ of the gas under its flow conditions, by measuring the capacitance of a capacitive transducer (Ct) through which said gas passes, the capacitance in vacuo of said component (Co) having previously been established by measurements performed in vacuo;

d) calculating the compressibility factor Zm by means of a processing and control unit (20) on the basis of the determined dielectric constant $\epsilon$ of the gas and of the measured temperature and pressure Tm, Pm, using the following equation:

$$Zm = \frac{Pm}{RTm} \left[ \frac{A_\epsilon}{CM} + \frac{B_\epsilon}{A_\epsilon} \right]$$

with :

$$CM = \frac{\epsilon - 1}{\epsilon + 2}$$

R being the perfect gas constant and $A_\epsilon$ and $B_\epsilon$ being coefficients depending in determined manner on the composition of the gas; and

e) calculating the gas flow rate Q along the duct (1) as reduced to predetermined reference conditions of temperature To, pressure Po, and compressibility factor Zo in the processing and control unit (20), using the following equation:

$$Q = Qm(Pm/Po)(To/Tm)(Zo/Zm).$$

3. Method for measuring the gas flow of a fluid flowing along a duct, comprising the following steps:

a) measuring the temperature Tm and the pressure Pm of said gas under its flow conditions by means of temperature (21) and pressure (22) sensors disposed in the duct (1),

b) determining the flow rate Qm of said gas under its flow conditions by means of a flow measuring device (23),

characterized in that it further comprises the following steps :

c) determining the dielectric constant $\epsilon$ of said gas under its flow conditions, by measuring the capacitance of a capacitive transducer (Ct) through which the gas passes, the capacitance in vacuo of said component (Co) having previously been established by measurements performed in vacuo;

d) calculating the compressibility factor Zm by means of a processing and control unit (20) on the basis of the determined dielectric constant $\epsilon$ of the gas and of the measured temperature and pressure Tm, Pm, using the following equation :

$$Zm = \left(\frac{Pm}{RTm}\right) \left[\frac{\epsilon + 2}{\epsilon - 1}\right] (A_\epsilon)$$

R being the perfect gas constant and $A_\epsilon$ being a coefficient depending in determined manner on the composition of the gas; and

e) calculating the gas flow rate Q along the duet as reduced to predetermined reference conditions of temperature To, pressure Po, and compressibility factor Zo in the processing and control unit (20), using the following equation:

$$Q = Qm(Pm/Po)(To/Tm)(Zo/Zm).$$

4. Method according to claims 1, 2 or 3, characterized in that the capacitive transducer (Ct) is constituted by a cylindrical capacitor so as to minimize the turbulence that exists in the flow of gas in the duct (1).

5. Gas flow measuring device for a fluid flowing in a duct, characterized in that it comprises a processing and control unit (20) connected firstly to a flow rate measuring device (23) which develops data representative of the flow rate Qm of the gas under conditions of temperature Tm and pressure Pm as determined by temperature (21) and pressure (22) sensors disposed in said duet (1), and secondly to a unit for determining the compressibility factor Zm (10 to 18) that comprises, in particular means for measuring the dielectric constant $\epsilon$ of the gas flowing along the duct in order to determine the value of the gas flow rate Q as reduced to predefined reference conditions of temperature To, pressure Po, and compressibility factor Zo.

6. Measurement device according to claim 5, characterized in that said measurement of the dielectric constant $\epsilon$ of the gas is obtained by a capacitor transducer placed in the same thermodynamic flow conditions as the gas.

7. Measurement device according to claim 6, characterized in that said capacitive transducer (Ct) is constituted by a cylindrical capacitor in order to minimize the turbulence that exists in the flow of gas along the duct (1).

8. Measurement device according to any one of claims 5 to 7, characterized in that said processing and control unit comprises analog means (270) for evaluating the dielectric constant $\epsilon$ of the gas; a micro-controller circuit (240) for determining parameters characteristic of the gas on the basis of said evaluation and of the measured pressure, temperature, and flow rate of the gas; an input and display unit (260) for displaying said parameters on request from an operator; and interface circuits (250) for transmitting said parameters remotely.

9. Measurement device according to claim 8, characterized in that said analog means comprises a bridge circuit having the capacitive transducer (Ct) constituting a first branch thereof and a second branch adjacent to the first and comprising a reference capacitor (Cref) in parallel with a capacitance (Cs) connected in series with a digitally controlled attenuator (X), the branches opposite to the first and second branches each being provided with respective antiphase alternating signal generators, and wherein balance is achieved when a detector (300) placed at the junction between the first and second branches delivers a null voltage after variation in the value of the attenuator (X) under the control of the processing and control unit (20).

10. Measurement device according to any one of claims 5 to 9, characterized in that said flow measuring device is constituted by an ultrasound flow meter.

11. Measurement device according to any one of claims 5 to 10, characterized in that said capacitive transducer is placed parallel with and outside the duct (1) in a circuit of pipework (25) fed upstream from the capacitor transducer (Ct) by the gas flowing along said duet, an insulating ease (28) ensuring that the assembly is thermally isolated so as to ensure that the capacitive transducer is under thermodynamic conditions identical to those in the gas, and in particular identical temperature conditions.

12. Measurement device according to any one of claims 5 to 10, characterized in that said capacitive transducer is placed in parallel inside the duct (1) and has the gas flowing along said duet flowing therethrough as conveyed by pipework (25) fed upstream from the capacitive transducer (Ct).

13. Measurement device according to any one of claims 5 to 10, characterized in that the capacitive transducer is placed in an enclosure (27) placed inside said duct and filled with the gas flowing along the duct, as delivered by pipework (25) fed upstream from the capacitive transducer (Ct).

**Patentansprüche**

1. Verfahren zur Messung des Gasdurchflusses eines in einer Leitung fließenden Fluids, bestehend aus den folgenden Schritten:

a) Messen der Gastemperatur Tm und des Gasdrucks Pm unter den Bedingungen des Zirkulierens dieses Gases mittels Temperaturfühler (21) und Druckfühler (22), die in der Leitung (1) angeordnet sind,

b) Bestimmen des Gasdurchflusses Qm unter den Bedingungen des Zirkulierens dieses Gases mittels einer Durchflußmeßvorrichtung (23),

dadurch gekennzeichnet, daß es ferner die folgenden Schritte aufweist:

c) Bestimmen der dielektrischen Konstante $\epsilon$ des Gases unter den Bedingungen des Zirkulierens dieses Gases durch das Messen der Kapazität eines kapazitiven Meßwandlers (Ct), durch den dieses Gas strömt, wobei die Kapazität dieses Elements (Co) bei Vakuum zuvor durch eine Vakuummessung als Eichgröße festgestellt wurde,

d) Berechnen des Verdichtbarkeitsfaktors Zm durch eine Verarbeitungs- und Steuereinheit (20) aus der Bestimmung der dielektrischen Konstante $\epsilon$ des Gases und der Messungen der Temperatur Tm und des Drucks Pm mittels der folgenden Gleichung:

$$Zm = \frac{Pm}{RTm} \left[ \frac{A\epsilon}{CM} + \frac{B\epsilon}{A\epsilon} + \frac{C\epsilon CM}{A\epsilon^2} - \frac{B\epsilon^2 \; CM}{A\epsilon^3} \right] \text{ und } CM = \frac{\epsilon - 1}{\epsilon + 2} \; ,$$

wobei R die Konstante der idealen Gase und $A_\epsilon$, $B_\epsilon$ und $C_\epsilon$ Koeffizienten sind, die in bestimmter Weise von der Zusammensetzung des Gases abhängen,

e) Berechnen des Gasdurchflusses Q in der Leitung (1), unter Setzung von vorbestimmten Referenzbedingungen bezüglich der Temperatur To, des Drucks Po und des Verdichtbarkeitsfaktors Zo durch die Verarbeitungs- und Steuereinheit (20) mittels der folgenden Gleichung:

$$Q = Qm \; \frac{Pm}{Po} \; \frac{To}{Tm} \; \frac{Zo}{Zm} \; .$$

2. Verfahren zur Messung des Gasdurchflusses eines in einer Leitung fließenden Fluids, bestehend aus den folgenden Schritten:

a) Messen der Gastemperatur Tm und des Gasdrucks Pm unter den Bedingungen des Zirkulierens dieses Gases mittels Temperaturfühler (21) und Druckfühler (22), die in der Leitung (1) angeordnet sind,

b) Bestimmen des Gasdurchflusses Qm unter den Bedingungen des Zirkulierens dieses Gases mittels einer Durchflußmeßvorrichtung (23),

dadurch gekennzeichnet, daß es ferner die folgenden Schritte aufweist:

c) Bestimmen der dielektrischen Konstante $\epsilon$ des Gases unter den Bedingungen des Zirkulierens dieses Gases durch das Messen der Kapazität eines kapazitiven Meßwandlers (Ct), durch den dieses Gas strömt, wobei die Kapazität dieses Elements (Co) bei Vakuum zuvor durch eine Vakuummessung als Eichgröße festgestellt wurde,

d) Berechnen des Verdichtbarkeitsfaktors Zm durch eine Verarbeitungs- und Steuereinheit (20) aus der Bestimmung der dielektrischen Konstante $\epsilon$ des Gases und der Messungen der Temperatur Tm und des Drucks Pm mittels der folgenden Gleichung:

$$Zm = \frac{Pm}{RTm} \left[ \frac{A\epsilon}{CM} + \frac{B\epsilon}{A\epsilon} \right] \text{ und } CM = \left[ \frac{\epsilon - 1}{\epsilon + 2} \right] \; ,$$

wobei R die Konstante der idealen Gase und $A_\epsilon$ und $B_\epsilon$ Koeffizienten sind, die in bestimmter Weise von der Zusammensetzung des Gases abhängen,

e) Berechnen des Gasdurchflusses Q in der Leitung (1), unter Setzung von vorbestimmten Referenzbedingungen bezüglich der Temperatur To, des Drucks Po und des Verdichtbarkeitsfaktors Zo durch die Verarbeitungs- und Steuereinheit (20) mittels der folgenden Gleichung:

$$Q = Qm \; \frac{Pm}{Po} \; \frac{To}{Tm} \; \frac{Zo}{Zm} \; .$$

3. Verfahren zur Messung des Gasdurchflusses eines in einer Leitung fließenden Fluids, bestehend aus den folgenden Schritten:

a) Messen der Gastemperatur Tm und des Gasdrucks Pm unter den Bedingungen des Zirkulierens dieses Gases mittels Temperaturfühler (21) und Druckfühler (22), die in der Leitung (1) angeordnet sind,

b) Bestimmen des Gasdurchflusses Qm unter den Bedingungen des Zirkulierens dieses Gases mittels einer Durchflußmeßvorrichtung (23),

dadurch gekennzeichnet, daß es ferner die folgenden Schritte aufweist:

c) Bestimmen der dielektrischen Konstante $\epsilon$ des Gases unter den Bedingungen des Zirkulierens dieses Gases durch das Messen der Kapazität eines kapazitiven Meßwandlers (Ct), durch den dieses Gas strömt, wobei die Kapazität dieses Elements (Co) bei Vakuum zuvor durch eine Vakuummessung als Eichgröße festgestellt wurde,

d) Berechnen des Verdichtbarkeitsfaktors Zm durch eine Verarbeitungs- und Steuereinheit (20) aus der Bestimmung der dielektrischen Konstante $\epsilon$ des Gases und der Messungen der Temperatur Tm und des Drucks Pm mittels der folgenden Gleichung:

$$Zm = \left(\frac{Pm}{RTm}\right) \left[\frac{\epsilon + 2}{\epsilon - 1}\right] (A_\epsilon)$$

wobei R die Konstante der idealen Gase und $A_\epsilon$ ein Koeffizient ist, der in bestimmter Weise von der Zusammensetzung des Gases abhängt,

e) Berechnen des Gasdurchflusses Q in der Leitung (1), unter Setzung von vorbestimmten Referenzbedingungen bezüglich der Temperatur To, des Drucks Po und des Verdichtbarkeitsfaktors Zo durch die Verarbeitungs- und Steuereinheit (20) mittels der folgenden Gleichung:

$$Q = Qm \; \frac{Pm}{Po} \; \frac{To}{Tm} \; \frac{Zo}{Zm} \; .$$

4. Verfahren nach den Ansprüchen 1, 2 oder 3, dadurch gekennzeichnet, daß der kapazitive Meßwandler (Ct) aus einem zylindrischen Kondensator besteht, um die Wirbelbildung beim Strömen des Gases in der Leitung (1) auf ein Minimum zu reduzieren.

5. Vorrichtung zur Messung des Gasdurchflusses eines in einer Leitung fließenden Fluids, dadurch gekennzeichnet, daß sie aus einer Verarbeitungs- und Steuereinheit (20) besteht, die einerseits mit einer Durchflußmeßvorrichtung (23) verbunden ist, die eine Information bezüglich des Gasdurchflusses Qm unter Temperaturbedingungen To und Druckbedingungen Po abgibt, welche durch Temperaturfühler (21) und Druckfühler (22), die in dieser Leitung (1) angeordnet sind, bestimmt werden, und andererseits mit einer Einheit zur Bestimmung des Verdichtbarkeitsfaktors Zm (10 bis 18) verbunden ist, die insbesondere aus Mitteln zur Messung der dieleitrischen Konstante $\epsilon$ des in dieser Leitung strömenden Gases verbunden ist, um den Wert des Gasdurchflusses Q unter Setzung von vorbestimmten Referenzbedingungen bezüglich der Temperatur To, des Drucks Po und des Verdichtbarkeitsfaktors Zo zu bestimmen.

6. Meßvorrichtung nach Anspruch 5, dadurch gekennzeichnet, daß die genannte Messung der dielektrischen Konstante $\epsilon$ des Gases durch einen kapazitiven Meßwandler (Ct) erzielt wird, der unter die thermodynamischen Bedingungen der Gaszirkulation gesetzt wird.

**7.** Meßvorrichtung nach Anspruch 6,
dadurch gekennzeichnet, daß der genannte kapazitive Meßwandler (Ct) aus einem zylindrischen Kondensator besteht, um die Wirbelbildung beim Strömen des Gases in der Leitung (1) auf ein Minimum zu reduzieren.

**8.** Meßvorrichtung nach einem der Ansprüche 5 bis 7,
dadurch gekennzeichnet, daß die genannte Verarbeitungs- und Steuereinheit aus einem analogen Mittel (270) zur Auswertung der dielektrischen Konstante $\epsilon$ des Gases, aus einer Mikrosteuerschaltung (240) zur Bestimmung der charakteristischen Parameter des Gases auf Basis dieser Auswertung und der Gasdruck-, Gastemperatur- und Gasdurchflußmessungen, aus einer Erfassungs- und Anzeigeeinheit (260) zur optischen Darstellung dieser Parameter auf Wunsch eines Bedieners, sowie aus Schnittstellenschaltungen (250) zur Fernübertragung dieser Parameter besteht.

**9.** Meßvorrichtung nach Anspruch 8,
dadurch gekennzeichnet, daß das genannte analoge Mittel aus einer Brückenschaltung besteht, in der der kapazitive Meßwandler (Ct) einen ersten Zweig bildet und bei der ein zweiter Zweig, der an den ersten angrenzt, einen Referenzkondensator (Cref) aufweist, der parallel zu einem mit einem numerisch gesteuerten Dämpfungswiderstand (X) in Reihe geschaltaten Kondensator (Cs) angeordnet ist, wobei die dem ersten und dem zweiten Zweig gegenüberliegenden Zweige jeweils mit einem Wechselsignalerzeuger mit entgegengesetzten Phasen ausgestattet sind, und daß das Gleichgewicht hergestellt wird, wenn ein Fühler (300), der an der Verbindungsstelle des ersten und des zweiten Zweiges angeordnet ist, nach einer Änderung des Werts des von der Verarbeitungs- und Steuereinheit (20) gesteuerten Dämpfungswiderstandes (X) eine Null-Spannung abgibt.

**10.** Meßvorrichtung nach einem der Ansprüche 5 bis 9,
dadurch gekennzeichnet, daß die genannte Durchflußmeßvorrichtung aus einem Ultraschall-Durchflußzähler besteht.

**11.** Meßvorrichtung nach einem der Ansprüche 5 bis 10,
dadurch gekennzeichnet, daß der genannte kapazitive Meßwandler abzweigend außerhalb der Leitung (1) in dem Kreislauf einer Rohrleitung (25) angeordnet ist, die vor diesem kapazitiven Meßwandler (Ct) mit dem in dieser Leitung strömenden Gas gespeist wird, wobei ein Isoliermantel (28) die Wärmeisolierung der Anordnung gewährleistet, um diesen kapazitiven Meßwandler unter thermodynamische Bedingungen zu setzen, insbesondere Temperaturbedingungen, die identisch mit denen des Gases sind.

**12.** Meßvorrichtung nach einem der Ansprüche 5 bis 10,
dadurch gekennzeichnet, daß der genannte kapazitive Meßwandler abzweigend innerhalb der Leitung (1) angeordnet ist und von dem in dieser Leitung strömenden Gas durchflossen wird, welches durch eine Rohrleitung (25) zugeführt wird, die vor diesem kapazitven Meßwandler (Ct) gespeist wird.

**13.** Meßvorrichtung nach einem der Ansprüche 5 bis 10,
dadurch gekennzeichnet, daß der genannte kapazitive Meßwandler sich in einem Behälter (27) befindet, der in der Leitung (1) angeordnet ist und mit dem in dieser Leitung strömenden Gas gefüllt ist, welches durch eine Rohrleitung (25) zugeführt wird, die vor diesem kapazitiven Meßwandler (Ct) gespeist wird.

$C_2 = C - V \cos \theta$

$C_1 = C + V \cos \theta$

# FIG.1

EP 0 550 333 B1

# FIG.2

# FIG. 3

# FIG.4

# FIG.5

FIG.6a

FIG.6b

FIG.6c